# EUROPÄISCHE PATENTANMELDUNG

(11) **EP 2 002 719 A1**
(43) Veröffentlichungstag der Anmeldung: **17.12.2008**
(21) Anmeldenummer: 07110022.6
(22) Anmeldetag: 12.06.2007
(51) Int. Cl.: A01N 25/04, A01N 59/00

(54) **Adjuvans-Zusammensetzung auf Ölbasis**

(71) Anmelder: Bayer CropScience AG, 40789 Monheim (DE)
(72) Erfinder: Vermeer, Ronald, Dr., 51371 Leverkusen (DE); Eberhard, Manuela, 51371 Leverkusen (DE); Fischer, Reiner, Dr., 40789 Monheim (DE); Pontzen,Rolf, Dr., 42799 Leichlingen (DE)

(57) **Zusammenfassung**

Gegenstand der vorliegenden Erfindung sind Zusammensetzungen enthaltend Öl und Ammoniumsalze, die agrochemischen Mitteln zugesetzt werden können und deren Wirkung verbessern.

## Beschreibung

Die vorliegende Erfindung betrifft neue Zusammensetzungen, die im Bereich des Pflanzenschutzes als Adjuvans anwendbar sind, zum Beispiel in Kombination mit agrochemischen Wirkstoffen.

Agrochemische Wirkstoffe, insbesondere solche, die im Nachauflauf mittels einer Spritzung appliziert werden und die über das Blatt in die Pflanzen aufgenommen werden, werden häufig in Kombination mit so genannten "tank-mix" Adjuvantien ausgebracht. Zur diesem Zweck werden die agrochemischen Formulierungen mit den "tank-mix" Adjuvantien in der Spritzbrühe zusammengemischt. Diese "tank-mix" Adjuvantien haben das Ziel, die biologische Wirkung der agrochemischen Wirkstoffe, wie z.B. Insektizide, Fungizide, Bakterizide, Herbizide, Wachstumsregulatoren, Akarizide oder Nematizide zu steigern und / oder die Ausbringbarkeit der Wirkstoffe zu verbessern.

Unter Adjuvantien werden dabei Materialen verstanden, die selbst nicht biologisch aktiv sind. Die biologische Wirkung läst sich z.B. verbessern durch Optimierung der Blatthaftung, Benetzung, Verteilung oder Aufnahme. Einige Eigenschaften der Spritzbrühe oder des Spritzbrühenrückstands auf der behandelten Pflanzenoberfläche, welche optimiert werden können sind Suspendierbarkeit, Emulgierbarkeit, Stabilität, Löslichkeit, pH-Wert, Schaumbildung, Oberflächenspannung, Dampfspannung, Pflanzenverträglichkeit, Drift, Tröpfchengroße oder Bedeckungsgrad. Adjuvantien können in verschiedene chemische Gruppen (z.B. Tenside, Fettsäureester, Polymere, Öle, Puffer, Organosiliciumverbindungen, Latex-Suspensionen etc.) unterteilt werden. Die Anwendung von Adjuvantien hat eine große praktische Bedeutung und wird in der Fachliteratur intensiv beschrieben (siehe z.B. C.L. Foy, D.W. Pritchard (Ed.), Pesticide Formulation and Adjuvant Technology, CRC Press, Inc, 1996, Boca Raton, Florida, USA; A. Knowles, Agrow Reports, Adjuvants and additives: 2006 edition, Informa UK Ltd, 2006, United Kingdom; Conference Proceedings ISAA 2004, Cape Town, South Africa).

Es sind bereits zahlreiche Adjuvans-Zusammensetzungen für die Anwendung in Kombination mit agrochemischen Wirkstoffen bekannt geworden.

Die Anwendung von verschiedensten Ölen zur Verbesserung der Effektivität von Pestiziden durch Verbesserung der Benetzungs- und Verteilungseigenschaften der Sprührückstände sind beschrieben. Beispiele dieser Öle sind Mineralöle, Pflanzenöle und Ester dieser Pflanzenöle. Es ist bekannt, dass Pflanzenölester die Aufnahme von vielen Pestiziden ins Blatt verbessern und dass die sehr niedrige Volatilität von Pflanzenölen die residuale Effektivität von Pflanzenschutzmitteln steigert. Nicht zuletzt ist die Anwendung von Paraffinölformulierungen als Sommerspritzung und Winterspritzung in der Praxis bekannt (z.B. Oleocin® der Firma Bayer CropScience).

In US 5,580,567 sind Zusammensetzungen beschrieben, die neben Öl ein Emulgatorsystem und einen Puffer enthalten. Vorteil dieser Adjuvantien ist, dass die Verbesserung der biologischen Wirkung und die Möglichkeit den pH-Wert einzustellen in einem Produkt zusammengefasst sind. In US 3,977,322 ist eine Zusammensetzung beschrieben, welche ein Mineralöl und ein Pflanzenöl enthält, die in Mischung die Effektivität von selektiven Herbiziden verbessern. Eine synergistische Herbizid-Zusammensetzung ist beschrieben in US 4,755,207. Diese Formulierungen enthalten ein pflanzenverträgliches Öl (raffiniertes Pflanzenöl oder stark raffiniertes Paraffinöl), ein Tensid und hydrophobe mykoherbizide Sporen.

Eine weitere Gruppe von Adjuvantien ist die der Ammoniumsalze. In der Literatur wurde bereits beschrieben, dass sich die Wirkung verschiedener Wirkstoffe durch Zugabe von Ammoniumsalzen steigern lässt. Dabei handelt es sich jedoch um als Detergens wirkende Salze (z.B. WO 95/017817) bzw. Salze mit längeren Alkyl- und / oder Arylsubstituenten, die permeabilisierend wirken oder die Löslichkeit des Wirkstoffs erhöhen (z.B. EP-A 0 453 086, EP-A 0 664 081, FR-A 2 600 494, US 4,844,734, US 5,462,912, US 5,538,937, US-A 03/0224939, US-A 05/0009880, US-A 05/0096386). Weiterhin beschreibt der Stand der Technik die Wirkung nur für bestimmte Wirkstoffe und / oder bestimmte Anwendungen der entsprechenden Mittel. In wieder anderen Fällen handelt es sich um Salze von Sulfonsäuren, bei denen die Säuren selber paralysierend auf Insekten wirken (US 2,842,476). Eine Wirkungssteigerung z.B. durch Ammoniumsulfat ist beispielsweise für die Herbizide Glyphosat und Phosphinothricin beschrieben (US 6,645,914, EP-A 0036 106).

Auch der Einsatz von Ammoniumsulfat als Formulierhilfsmittel ist für bestimmte Wirkstoffe und Anwendungen beschrieben (WO 92/16108), es dient dort aber zur Stabilisierung der Formulierung, nicht zur Wirkungssteigerung.

Weiter sind in z.B. DE 102 58 856 und WO 06/012209 Adjuvantien beschrieben die verschiedene Tenside enthalten. Diese Tenside haben wie die Ammoniumsalze als Ziel die Aufnahme in die Pflanze zur verbessern.

Es ist denkbar, dass Mischungen von Ammoniumsalze und Aufnahmeförderern wie Ölen und / oder Tensiden in ein Produkt zusammengefasst von Vorteil sind für den Anwender.

Die Verwendung von Ammoniumsalzen in wasserbasierten Adjuvans-Zusammensetzungen ist in verschiedenen Veröffentlichungen beschrieben. In WO 05/046326 und US 5,356,861 sind Zusammensetzungen beschrieben, die neben Wasser und Ammoniumsulfat Alkylpolysaccharide enthalten. WO 05/046326 beansprucht eine verbesserte Aufnahme von Nährstoffen in die Fruchte der behandelten Pflanze. US 5,356,861 offenbart die Verwendung einer Zusammensetzung zur Steigerung der Wirkung von Glyphosat. In WO 03/092373 werden Formulierungen genannt, die neben Wasser und Ammoniumsulfat iminodipropionate amphotherische Tenside enthalten. Ziel diese Formulierungen ist es eine Kompletlösung als "Tank-mix" für Herbizide anzubieten.

Der Hauptgrund dafür, dass nur wenige wasserbasierte "in-can" Mischungen (d.h. konzentrierte Fertigformulierungen) von Ammoniumsalzen mit aufnahmefördernden Hilfsmitteln bekannt sind, ist auf die schlechte physikalische Stabilität solcher Mischungen zurück zu fuhren. Außer bei wenigen Ausnahmen werden die Aufnahmeförderer durch die notwendige hohe Salzkonzentration ausflocken.

Der Verwendung von Öl als Aufnahmeförderer in Kombination mit Ammoniumsalz, eventuell gemischt mit weiteren aufnahmeförderende Tenside, statt der beschriebenen Wasser-Tensid Mischungen wäre eine logische Alternative. Jedoch sind, wie beschrieben, in der Literatur nur Adjuvans-Zusammensetzungen bekannt, die entweder Öl(e) oder Ammoniumsalz enthalten. Eine der Schwierigkeiten bei der Entwicklung solche Formulierungen ist die Darstellungsform des Ammoniumsalzes. In wässrigen Adjuvans-Zusammensetzungen liegen die Ammoniumsalze in der gelösten Form vor, resultierend in einer homogenen flüssigen Formulierung. In den verschiedenen Ölen, die zur Verbesserung der Effektivität von Pestiziden in Frage kommen, ist die Löslichkeit der geeigneten Ammoniumsalze geringer als die notwendige Menge des Salzes. Demzufolge wird das Ammoniumsalz in den auf Öl basierenden Formulierungen in kristalliner Form vorliegen, was formuliertechnische Problemen hervorruft. Zum Beispiel sind die gängigen Ammoniumsalze schlecht zerkleinerbar wegen ihrer Härte und sind in Öl-basierten Suspensionskonzentraten im Algemeinen schwierig zu stabilisieren.

Es bestand daher die Aufgabe, neue Adjuvans-Zusammensetzungen zur Verfügung zu stellen, die mindestens ein Öl, das zur Verbesserung der Effektivität von Pestiziden in Frage kommt, und ein geeignetes Ammoniumsalz in ausreichender Menge enthalten.

Überraschenderweise wurde nun gefunden, dass diese Aufgabe durch die spezielle Zusammensetzung der vorliegenden Erfindung gelöst wird.

Die vorliegende Erfindung betrifft somit eine Adjuvans-Zusammensetzung auf Ölbasis, enthaltend
a) mindestens ein Öl ausgewählt aus
   1) Pflanzenöl
   2) Mineralöl
   3) Paraffinöl
   4) Fettsäureester und Mischungen verschiedener Fettsäureester
b) mindestens ein Ammoniumsalz
c) mindestens ein Emulgiermittel
d) mindestens ein nicht-ionisches Tensid und/oder mindestens ein anionisches Tensid
e) gegebenenfalls einen Aufnahmeförderer und
f) gegebenenfalls einen oder mehrere Zusatzstoffe aus den Gruppen der schaumhemmenden Mittel, der Konservierungsmittel, der Antioxydantien, der Spreitmittel, der Farbstoffe und/oder ein Verdicker.

"Zusammensetzung auf Ölbasis" besagt dabei, dass die erfindungsgemäßen Zusammensetzungen weitgehend frei von Wasser sind.

Die vorliegende Erfindung betrifft weiterhin Verfahren zur Herstellung dieser Zusammensetzungen und ihre Verwendung zur Verbesserung der Wirkung von Pflanzenschutzmitteln.

Weiterhin wurde gefunden, dass sich die erfindungsgemäßen Adjuvans-Zusammensetzung auf Ölbasis herstellen lassen, indem man
a) mindestens ein Öl ausgewählt aus
   1) Pflanzenöl
   2) Mineralöl
   3) Paraffinöl
   4) Fettsäureester und Mischungen verschiedene Fettsäureester
b) mindestens ein Ammuniumsalz
c) mindestens ein Emulgiermittel
d) mindestens ein nicht-ionisches Tensid und/oder mindestens ein anionisches Tensid
e) gegebenenfalls einen Aufnahmeförderer und
f) gegebenenfalls einen oder mehrere Zusatzstoffe aus den Gruppen der schaumhemmenden Mittel, der Konservierungsmittel, der Antioxydantien, der Spreitmittel, der Farbstoffe und/oder einen Verdicker
   miteinander vermischt und die entstehende Suspension gegebenenfalls anschließend mahlt.

Schließlich wurde gefunden, dass sich die erfindungsgemäßen Adjuvans-Zusammensetzung auf Ölbasis in Kombination mit Formulierungen, welche agrochemische Wirkstoffe enthalten, sehr gut zur Applikation auf Pflanzen und/oder deren Lebensraum eignen.

Es ist als äußerst überraschend zu bezeichnen, dass die erfindungsgemäßen Adjuvans-Zusammensetzungen auf Ölbasis eine sehr gute Stabilität aufweisen, und insbesondere, dass auch nach Lagerung bei wechselnder Temperatur kein signifikantes Kristallwachstum des Ammoniumsalzes beobachtet wurde. Unerwartet ist auch, dass sie eine deutlich bessere biologische Wirksamkeit zeigen als die am ähnlichsten zusammengesetzten, vorbenannten Adjuvans-Zusammensetzungen. Im Übrigen übertreffen die erfindungsgemäßen ölbasierten Adjuvans-Zusammensetzungen hinsichtlich ihrer Aktivität überraschenderweise auch analoge Zubereitungen, die neben den anderen Komponenten entweder nur Ammoniumsalz oder nur Öl enthalten. Ein solcher synergistischer Effekt war aufgrund des vorbeschriebenen Standes der Technik nicht vorhersehbar.

Die erfindungsgemäßen Adjuvans-Zusammensetzungen auf Ölbasis zeichnen sich auch durch eine Reihe weiterer Vorteile aus. So wird der Zahl der notwendigen "tank-mix" Anwendungen verringert, weil mehrere zu optimierende Eigenschaften in den erfindungsgemäßen Adjuvans-Zusammensetzungen kombiniert worden sind. Der Anwender wird deshalb seine Pestizide nur mit einem statt mehreren Mischpartnern in der Spritzbrühe mischen müssen. Dieses hat als Vorteil die Vermeidung von Dosierungsfehlern und die Verbesserung der Sicherheit der Benutzer bei der Anwendung von agrochemischen Mitteln. Weiterhin wird dadurch Verwendung von Verpackungsmaterial für mehrere "tank-mix" Produkte vermieden. Vorteilhaft ist weiterhin, dass beim Verdünnen der erfindungsgemäßen Adjuvans-Zusammensetzung mit Wasser der pH-Wert der Spritzbrühe durch die Auswahl des Ammoniumsalzes im Produkt kontrollierbar ist. Schließlich begünstigen die erfindungsgemäßen Adjuvans-Zusammensetzung auf Ölbasis die biologische Wirksamkeit der aktiven Komponenten der Formulierungen, zu der die Adjuvans-Zusammensetzungen zugemischt werden, so dass im Vergleich zu herkömmlichen Zubereitungen entweder eine höhere Wirksamkeit erzielt wird oder weniger Pestizid erforderlich ist.

Im Folgenden werden bevorzugte Ausführungsformen des Erfindungsgegenstandes beschrieben.

Die in den erfindungsgemäßen Adjuvans-Zusammensetzungen enthaltenen 1) Pflanzenöle sind allgemein bekannt und kommerziell erhältlich. Unter dem Begriff Pflanzenöle werden z.B. Öle aus öllieferende Pflanzenarten wie Sojabohnenöl, Rapsöl, Maiskeimöl, Maiskernöl, Sonnenblumenöl, Baumwollsaatöl, Leinöl, Kokosöl, Palmöl, Distelöl, Walnussöl, Erdnusöl, Olivenöl oder Rhizinusöl, Rüböl insbesondere Sojabohnenöl, Rapsöl, Maiskeimöl oder Sonnenblumenöl und deren Mischungen verstanden. Die Pflanzenöle (Triglizeride) sind bevorzugt Ester von C₁₀-C₂₂-, vorzugsweise C₁₂-C₂₀-Fettsäuren von Glycerin. Die C₁₀-C₂₂-Fettsäurenester von Glycerin sind beispielsweise Ester ungesättigter oder gesättigter C₁₂-C₂₀-Fettsäuren, insbesondere mit gerader Kohlenstoffatomzahl, z.B. Erucasäure, Laurinsäure, Palmitinsäure, und insbesondere C₁₈-Fettsäure wie Stearinsäure, Ölsäure, Linolsäure oder Linolensäure.

Als Mineralöle kommen verschiedene kommerziell erhältliche Destillationsfraktionen von Erdöl (Petroleum) in Frage. Bevorzugt sind Mischungen von offenkettigen C₁₄-C₃₀-Kohlenwasserstoffen, geschlossenkettigen Kohlenwasserstoffen (Naphthene) und aromatischen Kohlenwasserstoffen. Die Kohlenwasserstoffe können sowohl linear als auch verzweigt sein. Besonders bevorzugt sind Mischungen, die einen nicht aromatischen Anteil kleiner als 8 Gew.-% vorweisen. Ganz besonders bevorzugt sind Mischungen, die einen nicht-aromatischen Anteil kleiner als 4 Gew.-% vorweisen.

Als Paraffinöle kommen lineare und verzweigte C₁₄-C₃₀-Kohlenwasserstoffe in Frage. Paraffinöle sind auch bekannt als Baseöl oder Weissöl und sind kommerziell erhältlich als Bayol® 85 (Exxon Mobil, Machelen, Belgien), Marcol® 82 (Exxon Mobil, Machelen, Belgien), BAR 0020 (RA.M.oil S.p.A., Neapel, Italien), Pionier 0032-20 (Hansen & Rosenthal KG, Hamburg, Deutschland) oder z.B. Kristol M14 (Carless, Surrey, England).

Als Fettsäureester kommen Alkyl-Fettsäureester wie C₁-C₂₀-Alkyl-C₁₀-C₂₂-Fettsäure-Ester in Frage. Bevorzugt sind Methylester, Ethylester, Propylester, Butylester, 2-ethyl-hexylester und Dodecylester. Besonders bevorzugt sind Methylester und Ethylester. Beispiele für synthetische Fettsäureester sind z.B. solche, die sich von Fettsäuren mit ungerader Kohlenstoffatomanzahl ableiten, wie C₁₁-C₂₁-Fettsäureester. Die Umesterung kann nach bekannten Methoden erfolgen, wie z.B. beschrieben im Römpp Chemie Lexikon, 9. Auflage, Band 2, Seite 1343, Thieme Verlag, Stuttgart.

Die Fettsäureester können in den erfindungsgemäßen Adjuvans-zusammensetzungen in Form kommerziell erhältlicher Ester, insbesondere Ester wie Rapsölmethylester, z.B. Edenor® MESU (Cognis, Deutschland) oder die Agnique® ME-Reihe (Cognis, Deutschland) oder in Form kommerziell erhältlicher ölhaltiger Formulierungszusatzstoffe, insbesondere solcher auf Basis von Rapsölmethyl- oder ethylester, z.B. Hasten® (Victoria Chemicals, Australien), Actirob® B (Novance, Frankreich) oder Stefes Mero® (Stefes, Deutschland) enthalten sein.

Erfindungsgemäße Ammoniumsalze werden durch Formel (I) definiert 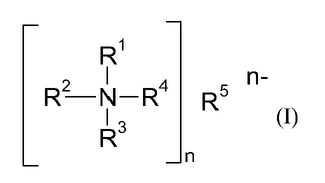 in welcher
- R¹, R², R³ und R⁴: unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
- R¹, R², R³ und R⁴: bevorzugt unabhängig voneinander für Wasserstoff oder jeweils gegebenenfalls substituiertes C₁-C₄-Alkyl stehen, wobei die Substituenten aus Halogen, Nitro und Cyano ausgewählt sein können,
- R¹, R², R³ und R⁴: besonders bevorzugt unabhängig voneinander für Wasserstoff, Methyl, Ethyl, n-Propyl, i-Propyl, n-Butyl, i-Butyl, s-Butyl oder t-Butyl stehen,
- R¹, R², R³ und R⁴: ganz besonders bevorzugt für Wasserstoff stehen,
- R¹, R², R³ und R⁴: weiterhin ganz besonders bevorzugt gleichzeitig für Methyl oder gleichzeitig für Ethyl stehen,
- n: für 1, 2, 3 oder 4 steht,
- n: bevorzugt für 1 oder 2 steht,
- R⁵: für ein anorganisches oder organisches Anion steht,
- R⁵: bevorzugt für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat, Oxalat, Carbonat, Pentaborat, Sulfit, Benzoat, Hydrogenoxalat, Hydrogencitrat, Methylsulfat oder Tetrafluoroborat steht,
- R⁵: besonders bevorzugt für Laktat, Sulfat, Nitrat, Thiosulfat, Thiocyanat, Citrat, Oxalat, Formiat, Monohydrogenphosphat oder Dihydrogenphosphat steht,
- R⁵: ganz besonders bevorzugt für Sulfat, Monohydrogenphosphat oder Dihydrogenphosphat steht.

Einsetzbare Emulgiermittel sind z.B. ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, sie Polyethylenoxid-Sorbitan-Fettsäureester und Sorbitan-Fettsäureester, beispielhaft genannt seien.

Als nicht-ionische Tenside kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Aufnahmeförderer kommen im vorliegenden Zusammenhang alle diejenigen Substanzen in Betracht, die üblicherweise eingesetzt werden, um das Eindringen von agrochemischen Wirkstoffen in Pflanzen zu verbessern. Aufnahmeförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die nachher und in der Literatur (Baur et al., 1997, Pesticide Science 51, 131-152) beschriebene Methode kann zur Bestimmung dieser Eigenschaft eingesetzt werden.

Als Aufnahmeförderer kommen beispielsweise Alkanol-alkoxylate in Betracht. Erfindungsgemäße Aufnahmeförderer sind Alkanol-alkoxylate der Formel

R-O-(-AO)ₘ-R' (II)

in welcher
- R: für geradkettiges oder verzweigtes Alkyl mit 4 bis 20 Kohlenstoffatomen steht,
- R': für Wasserstoff, Methyl, Ethyl, n-Propyl, i-Propyl, n-Butyl, i-Butyl, t-Butyl, n-Pentyl oder n-Hexyl steht,

AOfür einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- m: für Zahlen von 2 bis 30 steht.

Eine bevorzugte Gruppe von Aufnahmeförderern sind Alkanolalkoxylate der Formel

R-O-(-EO-)_{b}-R' (II-a)

in welcher
- R: die oben angegebene Bedeutung hat,
- R': die oben angegebene Bedeutung hat,
- EO: für -CH₂-CH₂-O- steht und
- B: für Zahlen von 2 bis 20 steht.

Eine weitere bevorzugte Gruppe von Aufnahmeförderern sind Alkanol-alkoxylate der Formel

R-O-(-EO-)ₚ-(-PO-)_{q}-R' (II-b)

in welcher
- R: die oben angegebene Bedeutung hat,
- R': die oben angegebene Bedeutung hat,
- EO: für -CH₂-CH₂-O- steht,

- PO: für 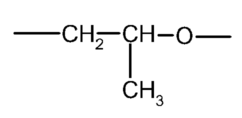 steht,
- p: für Zahlen von 1 bis 10 steht und
- q: für Zahlen von 1 bis 10 steht.

Eine weitere bevorzugte Gruppe von Aufnahmeförderern sind Alkanol-Alkoxylate der Formel

R-O-(-PO-)ᵣ-(EO-)ₛ-R' (II-c)

in welcher
- R: die oben angegebene Bedeutung hat,
- R': die oben angegebene Bedeutung hat,
- EO: für -CH₂-CH₂-O- steht,

- PO: für 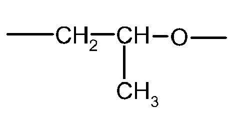 steht,
r für Zahlen von 1 bis 10 steht und
s für Zahlen von 1 bis 10 steht.

Eine weitere bevorzugte Gruppe von Aufnahmeförderern sind Alkanol-alkoxylate der Formel

R-O-(-EO-)ᵥ-(-BO-)ₓ-R' (II-d)

in welcher
- R und R': die oben angegebenen Bedeutungen haben,
- EO: für CH₂-CH₂-O- steht,

- BO: für 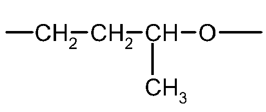 steht,
v für Zahlen von 1 bis 10 steht und
x für Zahlen von 1 bis 10 steht.

Eine weitere bevorzugte Gruppe von Aufnahmeförderern sind Alkanol-alkoxylate der Formel

R-O-(-BO-)_{y}-(-EO-)_{z}-R' (II-e)

in welcher
- R und R': die oben angegebenen Bedeutungen haben,

- BO: für 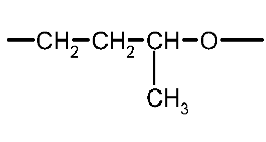 steht,
- EO: für CH₂-CH₂-O- steht,
- y: für Zahlen von 1 bis 10 steht und
- z: für Zahlen von 1 bis 10 steht.

Eine weitere bevorzugte Gruppe von Aufnahmeförderern sind Alkanol-Alkoxylate der Formel

CH₃-(CH₂)ₜ-CH₂-O-(-CH₂-CH₂-O-)ᵤ-R' (II-f)

in welcher
- R': die oben angegebene Bedeutung hat,
- t: für Zahlen von 8 bis 13 steht
- u: für Zahlen von 6 bis 17 steht.

In den zuvor angegebenen Formeln steht

Rvorzugsweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.

Als Beispiel für besonders bevorzugte Alkanol-Alkoxylate der Formel (II-a) seien ethoxylierte Guerbetalkohole der Formel (II-a-1) genannt:

R-O-(-EO-)_{b}-R' (II-a-1)

in welcher
- R: für einen C₁₆-C₁₈-Guerbetalkohol steht,
- R': für n-Butyl, i-Butyl oder t-Butyl steht,
- EO: für -CH₂-CH₂-O- steht und
- b: für Zahlen von 4 bis 10 steht.

Als Beispiel für ein besonders bevorzugtes Alkanol-Alkoxylat der Formel (II-c) sei 2-Ethyl-hexylalkoxylat der Formel 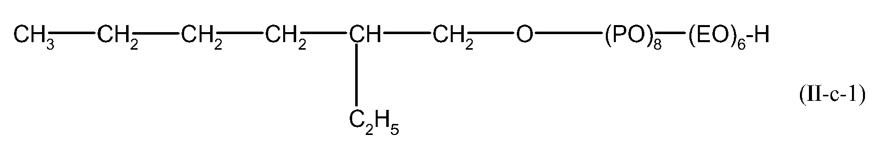 in welcher
- EO: für -CH₂-CH₂-O- steht,

- PO: für 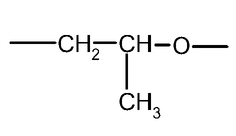 steht und
die Zahlen 8 und 6 Durchschnittswerte darstellen, genannt.

Als Beispiel für ein besonders bevorzugtes Alkanol-Alkoxylat der Formel (II-d) sei die Formel

CH₃-(CH₂)₁₀-O-(-EO-)₆-(-BO-)₂-CH₃ (II-d-1)

in welcher
- EO: für CH₂-CH₂-O- steht,

- BO: für 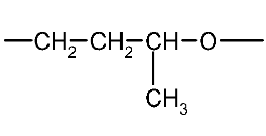 steht und
die Zahlen 10, 6 und 2 Durchschnittswerte darstellen, genannt.

Besonders bevorzugte Alkanol-Alkoxylate der Formel (II-f) sind Verbindungen dieser Formel, in denen
- t: für Zahlen von 9 bis 12 und
- u: für Zahlen von 7 bis 9
steht.

Ganz besonders bevorzugt genannt sei Alkanol-Alkoxylat der Formel (II-f-1)

CH₃-(CH₂)ₜ-CH₂-O-(-CH₂-CH₂-O-)ᵤ-H (II-f-1)

in welcher
- t: für den Durchschnittswert 10,5 steht und
- u: für den Durchschnittswert 8,4 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-Alkoxylate der angegebenen Formeln sind bekannt und sind teilweise kommerziell erhältlich oder lassen sich nach bekannten Methoden herstellen (vgl. WO 98-35 553, WO 00-35 278 und EP-A 0 681 865).

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel®.

Als Antioxydantien kommen alle üblicherweise für diesen Zweck in agrochemischen Mitteln einsetzbaren Substanzen in Betracht. Bevorzugt ist 2,6-Di-tert.-butyl-4-methylphenol.

Als Spreitmittel kommen alle üblicherweise für diesen Zweck in agro-chemischen Mitteln einsetzbaren Substanzen in Betracht. Bevorzugt sind Alkylsiloxane.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als Verdicker kommen alle üblicherweise für diesen Zweck in agrochemischen Mitteln einsetzbaren Substanzen in Betracht, die als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate wie Bentonite, Attapulgite oder Montmorillite, außerdem Talkum.

Der Gehalt an den einzelnen Komponenten kann in den erfindungsgemäßen Zusammensetzungen innerhalb eines größeren Bereiches variiert werden. Bevorzugt sind Zusammensetzungen enthaltend
a) 20 -75 Gew.-% Öl
b) 5-35 Gew.-% Ammoniumsalz
c) 1-15 Gew.-% Emulgiermittel
d) 1-15 Gew.-% nicht-ionisches Tensid und/oder anionisches Tensid
e) 0-25 Gew.-% Aufnahmeförderer
f) 0-10 Gew.-% eines oder mehrerer Zusatzstoffe aus den Gruppen der schaumhemmenden Mittel, der Konservierungsmittel, der Antioxydantien, der Spreitmittel, der Farbstoffe und/oder einen Verdicker.

Besonders bevorzugt sind Zusammensetzungen enthaltend
a) 40 - 60 Gew.-% Öl
b) 10 - 30 Gew.-% Ammoniumsalz
c) 5 - 12 Gew.-% Emulgiermittel
d) 5 - 10 Gew.-% nicht-ionisches Tensid und/oder anionisches Tensid
e) 0 - 20 Gew.-% Aufnahmeförderer
f) 0 - 7,5 Gew.-% eines oder mehrerer Zusatzstoffe aus den Gruppen der schaumhemmenden Mittel, der Konservierungsmittel, der Antioxydantien, der Spreitmittel, der Farbstoffe und/oder einen Verdicker

Die Herstellung der erfindungsgemäßen Adjuvans-Zusammensetzungen auf Ölbasis erfolgt in der Weise, dass man die Komponenten in den jeweils gewünschten Verhältnissen miteinander vermischt. Die Reihenfolge, in der die Bestandteile miteinander vermengt werden, ist beliebig. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen.

Die Temperaturen können bei der Durchführung des erfindungsgemäßen Verfahrens in einem bestimmten Bereich variiert werden. Man arbeitet im allgemeinen bei Temperaturen zwischen 10°C und 60°C, vorzugsweise zwischen 15°C und 40°C.

Zur Durchführung des erfindungsgemäßen Verfahrens kommen übliche Misch- und Mahlgeräte in Betracht, die zur Herstellung von agrochemischen Formulierungen eingesetzt werden.

Bei den erfindungsgemäßen Adjuvans-Zusammensetzungen auf Ölbasis handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überführen.

Die erfindungsgemäßen Adjuvans-Zusammensetzungen können in Kombination mit verschiedenen Pestizid-Formulierungen angewendet werden. Bevorzugt sind Pestizid-Formulierungen, welche einen oder mehrere Wirkstoffe aus den Gruppen der Insektizide, Fungizide, Bakterizide, Herbizide, Wachstumsregulatoren, Akarizide oder Nematizide enthalten. Zusätzlich können sie in Kombination mit Dünger und/oder weiteren Nährstoffe ausgebracht werden. Die optimale Wirkung der Anwendung kann durch die Art der behandelten Pflanze, Krankheit, Spritzapparatur, Spritzvolumen, Druck, Tröpfchengröße, Mischungspartner, Umgebungsfaktoren und andere Faktoren beeinflusst werden. Demzufolge ist es wichtig, den durch die Behandlung gebildeten Spritzbelag zu beobachten und - wenn notwendig - die Anwendungskonzentration der Adjuvans-Zusammensetzung anzupassen.

Bei der Applikation ist das Gewichtsverhältnis an agrochemischem Wirkstoff zu erfindungsgemäßer Adjuvans-Zusammensetzung im Allgemeinen im Bereich 1 : 10000 bis 100 : 1, insbesondere 1 : 1000 bis 10 : 1, in Abhängigkeit von der Wirksamkeit des jeweiligen agrochemischen Wirkstoffs. Bei der Applikation ist die Konzentration an agrochemischem Wirkstoff im allgemeinen bei 10⁻⁶ bis 10 Gew.-%, vorzugsweise bei 10⁻⁵ bis 4 Gew.-% in dem applizierten Mittel, z.B. der Spritzbrühe, bei einer Aufwandmenge von 1 bis 5000 l/ha, vorzugsweise 50 bis 1000 l/ha. Die Konzentration an erfindungsgemäßen Adjuvans-Zusammensetzung ist im allgemeinen bei 0,005 bis 5 Gew.-%, vorzugsweise bei 0,05 bis 3 Gew.-% in dem applizierten Mittel, z.B. der Spritzbrühe, bei einer Aufwandmenge von 1 bis 5000 l/ha, vorzugsweise 50 bis 1000 l/ha.

Für die Benutzung der erfindungsgemäßen Adjuvans-Zusammensetzung mit einer agrochemischen Formulierung wird der Spritztank zur Hälfte mit Wasser gefüllt und gerührt. Im nächsten Schritt werden die verschiedenen Produkte zugegeben, wobei die folgende Reihe eingehalten wird: Zuerst werden die festen Formulierungen eingerührt, dann die Suspensionskonzentrate und die erfindungsgemäße Adjuvans-Zusammensetzung und zuletzt die homogenen flüssigen Formulierungen. Der Spritztank wird mit Wasser aufgefüllt und noch mal homogenisiert. Bei der Anwendung von hohe Salzkonzentration empfindliche Formulierungen ist es auch möglich die erfindungsgemäße Adjuvans-Zusammensetzung zuletzt an die Spritzbrühe zu zu geben.

Mit Hilfe der erfindungsgemäßen Adjuvans-Zusammensetzung auf Ölbasis lassen sich agrochemische Wirkstoffe in besonders vorteilhafter Weise auf Pflanzen und/oder deren Lebensraum ausbringen. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen. Die enthaltenen agrochemischen Wirkstoffe entfalten dabei eine bessere biologische Wirksamkeit als bei Applikation in Form der entsprechenden herkömmlichen Formulierungen.

Die Erfindung wird durch die folgenden Beispiele veranschaulicht.

### Herstellungsbeispiele

### Beispiel 1

Zur Herstellung eines Suspensionskonzentrates der Adjuvans-Zusammensetzung werden

| | |
|---|---|
| 250 g | Ammoniumsulfat |
| 44 g | Emulsifier SO 70 |
| 66 g | Emulsifier 1371 A |
| 90 g | Agrimer® AL 22 |
| 10 g | Morwet® D-425 |
| 4 g | Polydimethylsiloxan |
| 8 g | Vulkanox® BHT |
| 540 g | Edenor® ME SU |

unter Rühren bei Raumtemperatur gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90% der Feststoffpartikel eine Teilchengröße unter 6 µm aufweisen.

Analog zu Beispiel 1 sind folgende Zusammensetzungen hergestellt worden:

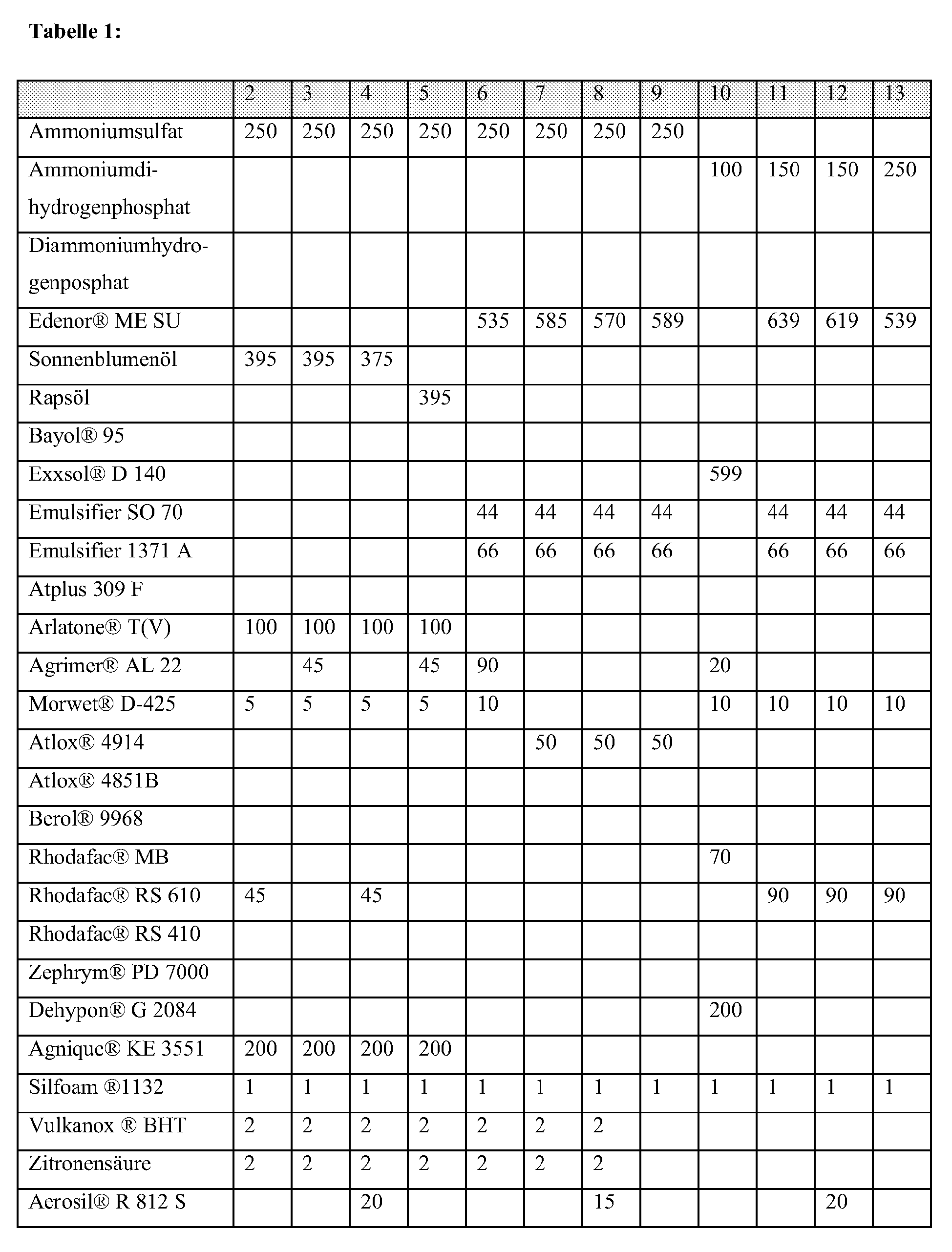

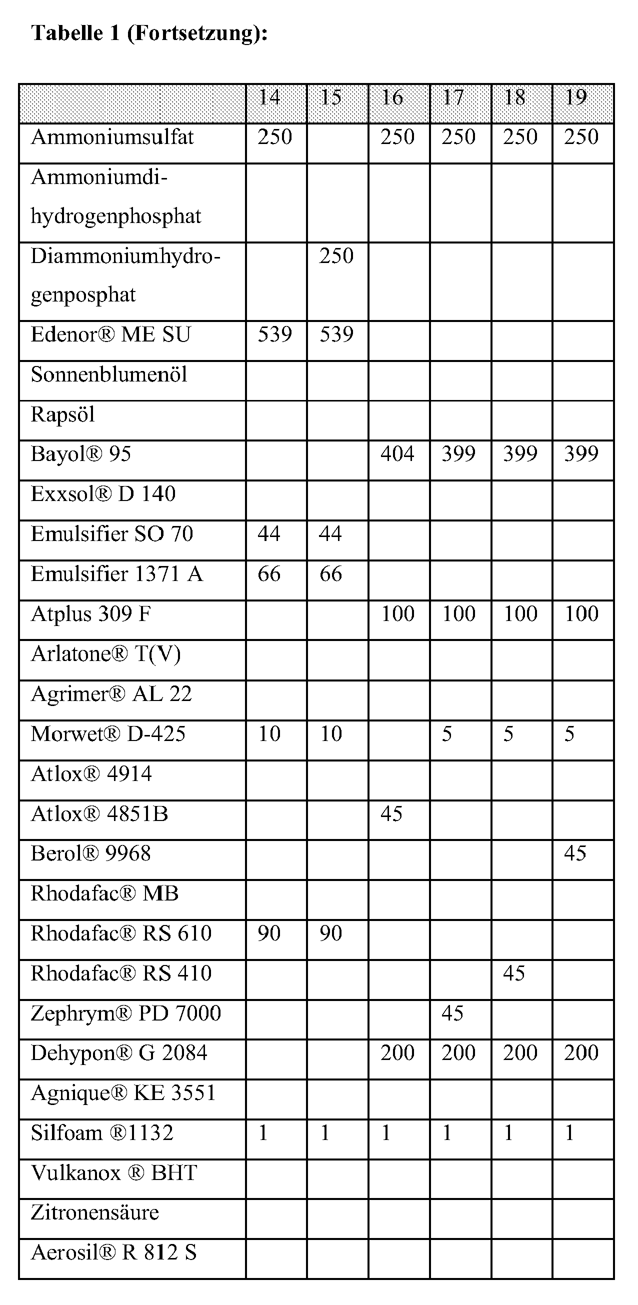

Die durch ihre Handelsnamen definierten Komponenten der erfindungsgemäßen Zusammensetzungen sind bei folgenden Lieferanten erhältlich:

**Tabelle 2**

| Handelsname | Verbindungstyp | Lieferant |
|---|---|---|
| Aerosil® R 812 S | Hydrophobes Silica | Degussa |
| Agnique® KE 3552 | Alkanol-Alkoxylat | Cognis |
| Agrimer® AL 22 | Polyvinylpyrrilidon-Derivat | ISP |
| Arlatone® T | PEG-40 Sorbitan peroleat, nicht-ionisch | Uniqema |
| Atlox® 4851 B | POE Triglycerid alkylaryl/sulfonat Mischung | Uniqema |
| Atlox® 4914 | Polymeres Tensid | Uniqema |
| Atplus® 309 F | Anionische/nicht-ionische Mischung | Uniqema |
| Bayol® 95 | Paraffinöl | Exxonmobil |
| Berol® 9968 | Ca DBS non-ionic Blend | AkzoNobel |
| Dehypon® G 2084 | Guerbetalkohol-polyglykolether-Butyl | Cognis |
| Edenor® ME SU | Rapsölmethylester | Cognis |
| Emulsifier® 1371 A | Alkylarylsulfonat | Lanxess |
| Emulsifier® SO 70 | Fettsäure-Polyethylenether-Ester | Lanxess |
| Exxsol® D 140 | Mineralöl | Exxonmobil |
| Morwet® D 425 | Naphthalinsulfonat | Witco |
| Rhodafac® MB | Tridecylpolyoxyethylenesterphosphat | Rhodia |
| Rhodafac® RS 410 | Tridecylpolyoxyethylenesterphosphat | Rhodia |
| Rhodafac® RS 610 | Tridecylpolyoxyethylenesterphosphat | Rhodia |
| Silfoam ®1132 | Polydimethylsiloxan | Wacker Chemie |
| Vulkanox® BHT | Buthylhydroxytoluol | Lanxess |
| Zephrym® PD 7000 | Polyoxyalkylenamin-Derivat | Uniqema |

### Verwendungsbeispiele

### Beispiel I

### Stabilitätstest

Zur Bestimmung der Stabilität werden jeweils 100 g eines Suspensionskonzentrates der im Beispiel 14 beschriebenen Zusammensetzung über mehrere Wochen bei

| Raumtemperatur (RT), |
|---|
| + 30°C, |
| + 40°C |
| + 54°C |

wechselnden Temperaturen (TW: 6 Stunden bei -15°C, dann 6 Stunden bei +30°C)
gelagert. Die Versuchsergebnisse sind in den folgenden Tabellen zusammengestellt.

**Tabelle3**

| Physikalische Daten direkt nach Herstellung (OTW) der Formulierung | | |
|---|---|---|
| | OTW | |
| Sedimentvolumen in % ^{*)} | 100 | |
| Korngröße ^{**)} in µm | 5,2 | |

| | | |
|---|---|---|
| ^{*)}Sedimentvolumen = Volumen der Sediment-Phase im Verhältnis zum Gesamtvolumen der Probe. ^{**)}Gemessen wurde die mittlere Korngrößein der mit Wirkstoff gesättigte Ölphase, die 90% der Feststoffpartikel in der Ölphase aufweisen. | | |

**Tabelle 4**

| Physikalische Daten erfindungsgemäßer Zusammensetzungen nach zwei Wochen Lagerung bei unterschiedlichen Temperaturen | | | | | |
|---|---|---|---|---|---|
| | Nach 2 Wochen bei | | | | |
| | RT | 30°C | 40°C | 54°C | TW |
| Sedimentvolumen in % ^{*)} | 98 | 99 | 92 | 89 | 99 |
| Bodensatz | keiner | keiner | keiner | keiner | keiner |
| Redispergierbarkeit | gut | gut | gut | gut | gut |
| Korngröße ^{**)} in µm | 5,2 | 5,1 | 5,4 | 5,3 | 5,4 |

| | | | | | |
|---|---|---|---|---|---|
| ^{*)}Sedimentvolumen = Volumen der Sediment-Phase im Verhältnis zum Gesamtvolumen der Probe. ^{**)}Gemessen wurde die Korngröße d₉₀ der mit Wirkstoff gesättigten Ölphase, die 90% der Feststoffpartikel in der Ölphase nicht überschreiten. | | | | | |

**Tabelle 5**

| Physikalische Daten erfindungsgemäßer Zusammensetzungen nach acht Wochen Lagerung bei unterschiedlichen Temperaturen | | | | | |
|---|---|---|---|---|---|
| | Nach 8 Wochen bei | | | | |
| | RT | 30°C | 40°C | 54°C | TW |
| Sedimentvolumen in %^{*)} | | | | | |
| Bodensatz | | | | | |
| Redispergierbarkeit | | | | | |
| Korngröße^{**)} in µm | | | | | |

| | | | | | |
|---|---|---|---|---|---|
| ^{*)}Sedimentvolumen = Volumen der Sediment-Phase im Verhältnis zum Gesamtvolumen der Probe. ^{**)}Gemessen wurde die Korngröße d₉₀ der mit Wirkstoff gesättigten Ölphase, die 90% der Feststoffpartikel in der Ölphase nicht überschreiten. | | | | | |

### Beispiel II

### Penetrationstest

In diesem Test wurde die Penetration von Wirkstoffen durch enzymatisch isolierte Kutikeln von Apfelbaumblättern gemessen.

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der Diffusionszelle zugewandt war. Die Diffusionszellen waren mit Wasser bzw. mit einem Gemisch aus Wasser und Lösungsmittel gefüllt.

Zur Bestimmung der Penetration wurden jeweils 9 µl einer Spritzbrühe der nachstehend genannten Zusammensetzungen auf die Außenseite einer Kutikula appliziert.

### Spritzbrühe A

Enthaltend Stefes Mero® in bestimmungsgemäßer Konzentration und eine handelsübliche Formulierung des Wirkstoffs (z.B. Glyphosat) in bestimmungsgemäßer Konzentration

### Spritzbrühe B

Enthaltend Ammoniumsulfat und eine handelsübliche Formulierung des Wirkstoffs (z.B. Glyphosat) in bestimmungsgemäßer Konzentration

### Spritzbrühe C

Enthaltend Stefes Mero® in bestimmungsgemäßer Konzentration, Ammoniumsulfat und eine handelsübliche Formulierung des Wirkstoffs (z.B. Glyphosat) in bestimmungsgemäßer Konzentration

### Spritzbrühe D

Enthaltend eine erfindungsgemäße Adjuvans-Zusammensetzung (Beispiel 14) + eine handelsübliche Formulierung des Wirkstoffs (z.B. Glyphosat)

In den Spritzbrühen wurde jeweils CIPAC C-Wasser verwendet.

Nach dem Auftragen der Spritzbrühen ließ man jeweils das Wasser verdunsten, drehte dann jeweils die Kammern um und stellte sie in thermostatisierte Wannen, wobei sich unter der Außenseite der Kutikula jeweils eine gesättigte wässrige Calciumnitrat-4-hydrat-Lösung befand. Die einsetzende Penetration fand daher bei einer relativen Luftfeuchtigkeit von 56 % und einer eingestellten Temperatur von 25°C statt. In regelmäßigen Abständen wurden mit einer Spritze Proben entnommen und mittels HPLC auf den Gehalt an penetriertem Wirkstoff hin untersucht.

Die Versuchsergebnisse gehen aus der folgenden Tabelle hervor. Bei den angegebenen Zahlen handelt es sich um Durchschnittswerte von 8 Messungen.
**Tabelle 6**

## Patentansprüche

1. Zusammensetzung umfassend
a) mindestens ein Öl ausgewählt aus
1) Pflanzenöl
2) Mineralöl
3) Paraffinöl
4) Fettsäureester und Mischungen verschiedener Fettsäureester
b) mindestens ein Ammoniumsalz
c) mindestens ein Emulgiermittel
d) mindestens ein nicht-ionisches Tensid und/oder mindestens ein anionisches Tensid

2. Verwendung einer Zusammensetzung gemäß Anspruch 1 zur Verbesserung der Wirkung von Pflanzenschutzmitteln.
